# EUROPEAN PATENT APPLICATION

(11) **EP 2 243 546 A1**
(43) Date of publication of application: **27.10.2010**
(21) Application number: 09251134.4
(22) Date of filing: 20.04.2009
(51) Int. Cl.: B01F 17/00, C09K 3/32

(54) **Aqueous solvents for hydrocarbons and other hydrophobic compounds**

(71) Applicant: Imperial Innovations Limited, London SW7 2PG (GB)
(72) Inventor: Baki, Alexander O., London SW7 2AZ (GB); Sephton, Mark A., London SW7 2AZ (GB); Sims, Mark R., Leicester LE 1 7RH (GB); Cullen, David, Bedfordshire MK45 4DT (GB)
(74) Representative: Hedley, Nicholas James Matthew

(57) **Abstract**

The present invention provides a method of solubilising in an aqueous medium a hydrocarbon or a hydrophobic compound having a hydrocarbon skeleton that carries one or more heteroatom-containing functional groups, e.g. hydroxyl, carboxylic acid or aldehyde (CHO) groups. The method comprises contacting the hydrocarbon or the hydrophobic compound with the aqueous medium that includes at least one non-ionic surfactant containing a hydrophilic part and a hydrophobic part, the hydrophilic part comprising a polyhydroxylated moiety and the hydrophobic part comprising a hydrocarbon chain containing at least 12 carbon atoms, e.g. ethoxylated sorbitol. The amount of surfactant used is sufficient to form micelles including a core formed of the hydrocarbon or the hydrophobic compound.

## Description

### Technical Field

The present invention relates to the solublising of hydrocarbons in an aqueous medium in the place of organic and halogenated solvents. The invention also extends to the solubilising in an aqueous medium of hydrophobic compounds that have a hydrocarbon skeleton but with additional heteroatom-containing functional groups attached to form, e.g. alcohols, aldehydes and carboxylic acids.

### Background Art

The production of organic solvents is often difficult, time consuming and inefficient. For instance, dichloromethane is produced by reacting either methyl chloride or methane with chlorine gas at 400-500 °C. At these temperatures, both methane and methyl chloride undergo a series of reactions producing progressively more chlorinated products. The products of these processes are a mixture of methyl chloride, dichloromethane, chloroform, and carbon tetrachloride. From these compounds, dichloromethane must then be isolated by distillation.

Organic solvents are also expensive. In addition to cost of the catalysis and distillation process, the raw materials themselves require a substantial investment. The industrial production of many organic solvents initiates from petroleum fractions, thus as resources become scarcer and petroleum prices increase, it follows that the cost of production for organic solvents will also get more expensive.

Once produced, organic solvents represent a substantial health hazard to those who work with them. Inhalation or direct contact with skin are usually the most significant routes by which humans can be contaminated. Exposure to hazardous material may be acute, in response to a single high dose, or chronic, in response to a prolonged low dose. Both mechanisms are potential hazards for workers and can result in serious problems for the respiratory system, skin, brain and internal organs. As an example of their potency, chlorinated organic solvents are commonly used to induce organ failure to laboratory animals during medical studies. A number of organic solvents are proven or suspected carcinogens.

Despite best efforts in industrial design, organic solvents inevitably contaminate our environment. Their ease of escape from industrial processes is related to the intrinsic nature of these materials, e.g. their volatility, which make them difficult to contain, store and recycle. Once leached into soil, the contamination of groundwater by non-aqueous liquids such as organic solvents is cause for concern throughout the world. They migrate into aquifers under the force of gravity and capilliary forces and can accumulate in the form of immobile pools above permeability barriers.

Organic and halogenated solvents are extensively used for dissolving hydrocarbons and almost 50 billion kilograms of organic and halogenated solvents are produced each year.

Organic solvents are commonly used for extracting hydrocarbons from various matrices, e.g. for analysis, despite the difficulty of production, expense, health hazards and potential harm to the environment.

It would be desirable to reduce the requirement for organic solvents, especially halogenated organic solvents. It is the object of the present invention to provide an alternative solvent for hydrocarbons that is cheaper, less damaging to the environment and a reduced health hazard.

In areas such as Canada and Venezuela there are large oil deposits that occur mixed with sand and shale and it is problematic to separate the oil from the sand/shale but such deposits will become an increasingly important source of the world's oil as the more easily accessible sources are exhausted.

Commercial plants mine oil sands and extract the bitumen using a process called hot water and flotation. Oil sands are often water wet, but with the water existing as discrete coatings around the sand grains. Consequently, the oil generally makes little contact with the mineral phase facilitating extraction. Mined oil sands are first slurried with hot water and disaggregated. The slurry is then washed with hot water and transferred to flotation vessels where the oil is recovered from the water surface. The remaining water and residual materials are transported to a settling basin where they will reside for several years, allowing the organic impurities to degrade. Eventually the water is sufficiently liberated from contaminants and it is then safe to release the stored water into natural waterways.

The water used in the settling step represents over 70% of the water demand in the oil extraction process. Escape of waters from the settling tanks has a deleterious effect on the local environment owing to the residual organic toxins that were not recovered in the flotation vessels.

It would be desirable to reduce the settling time in such settling basins in order to reduce the amount of land occupied by the settling basins to reduce the amount of water tied up in the settling basins and to reduce the risk of escape of the water from the settling basins and its resulting contamination of the environment.

Surfactant molecules are of course well-known and have hydrophilic and hydrophobic parts. It is also well-known that surfactants form micelles in an aqueous solution and in the presence of a water-immiscible liquid, e.g. an oil, when the surfactant is present above a critical concentration in water (cmc).

The micellar interior is composed essentially of the water-immiscible liquid and has properties closely related to the liquid itself.

Polysorbates are a known class of emulsifiers and are commonly used in food and pharmaceutical preparation. They are essentially ethoxylated sorbitol that has been esterified with fatty aids. A common polysorbate is polysorbate 80, which is commercially available under the trademark Tween 80 and is often used in ice cream to prevent milk proteins from completely coating fat droplets, allowing the fat droplets to join together in chains and nets to hold air in the mixture and provide a firmer texture.

Other polysorbates, e.g. polysorbate 20, polysorbate 40, polysorbate 60, differ from polysorbate 80 by the length of the fatty acid moiety. They are also used in foods and pharmaceuticals, e.g. to form pharmaceutical oil-in-water emulsions (creams).

The present invention is based on work performed in connection with a space probe to find a solvent that will dissolve both polar and non-polar materials from the surface of Mars in order to analyse them. The use of separate organic and aqueous solvents is not practicable in the space programme because of the limited volume and procedures that are available in a space craft.

To our knowledge, there has been no proposal to use polysorbates or other non-ionic surfactants of a similar structure to solublise hydrocarbons, for example to clean hydrocarbon deposits from machinery.

### Disclosure of Invention

The present invention provides a surprisingly effective method of solublising hydrocarbons using an aqueous solvent. The solvent used alleviates the requirement to use organic solvents to dissolve hydrocarbons, thereby providing significant improvements in cost, health and the environment.

In accordance with the present invention, there is provided a method of solubilising hydrocarbons in an aqueous medium, the method comprises contacting the hydrocarbon with the aqueous medium that includes at least one non-ionic surfactant containing a hydrophilic part and a hydrophobic part, the hydrophilic part comprising a polyhydroxylated moiety and the hydrophobic part comprising a hydrocarbon chain containing at least 12 carbon atoms, the amount of surfactant being sufficient to form micelles including a core formed of the hydrocarbon.

The polyhydroxylated moiety may comprise a polyol that has optionally been alkoxylated, especially ethoxylated, and may be an optionally alkoxylated sugar such as sorbitol.

The hydrocarbon chain forming the hydrophobic part of the surfactant may have 12 to 24 carbon atoms, typically 14 to 18 carbon atoms and we have found excellent results with a hydrophybic hydrocarbon chain containing 18 carbon atoms. The chain can include a number (e.g. 1, 2 or 3) of unsaturated carbon-carbon bonds, especially double bonds. The longer the length of the alkyl chain, e.g. of Polysorbate 80 (18 carbon atoms), the larger the micelles that are formed; the larger micelles can physically contain a greater number of non-polar molecules e.g. hydrocarbons, thereby increasing its extraction efficiency. The longer chain and the larger core size also allows the non-polar molecules to migrate into the core of an already formed micelle, thereby coalescing with the core. The surfactants in accordance with the present invention include at least 12 carbon atoms and generally at least 14; the maximum length is about 24 carbon atoms.

The two parts of the surfactant are preferably connected by an ester linkage, e.g. by the esterification of a polyhydroxylated compound with a fatty acid, e.g. lauric acid, palmitic acid, stearic acid or oleic acid. Although it is possible to include more than one hydrocarbon chain in the surfactant, it is preferred that a single hydrocarbon chain is present since the micelles in such a case are sterically less cluttered, which allows the hydrocarbons to migrate into an already formed micelle core.

The most preferred surfactants are fatty acid esters of optionally alkoxylated sorbitol, which are referred to as "polysorbates" and are commercially available under the trademark Tween. The most preferred polysorbate is polysorbate 80, although other polysorbates are useful.

One particular application of the method of the present invention is to treat waste water and natural water (e.g. in rives, streams and lakes) containing hydrocarbons and hydrocarbon-related compounds, e.g. obtained in the course of extracting hydrocarbons from sand and shale deposits as described above. In accordance with one aspect of the present invention, the waste water is treated with the surfactant or a solution containing the surfactant, which causes the hydrocarbons and hydrocarbon-related compounds present to collect within surfactant micelles. The hydrocarbons migrate into the micelles and in this way, the surfactant can scavenge the water for hydrocarbon and hydrocarbon-related residues.

The water can then be treated to isolate the hydrocarbon-containing micelles, for example by heating the aqueous solution to a temperature above the cloud point which will allow the hydrocarbon-containing micelles to separate from the water. An increase in temperature causes the cleavage of the hydrogen bond between the oxygen atoms in the surfactant and water and the solution separates into two phases - a surfactant-rich phase and a water phase. The hydrocarbons are concentrated in the surfactant phase. For oil sand settling pools, hot water surfactant solutions could be introduced at temperatures above the cloud point and, following a short settling period, the purified aqueous phase can then be recovered by decantation or sluicing. Similar procedures can be employed for water recycling following industrial cleaning activities.

The ability of surfactants to scavenge non-polar organic compounds from water makes them ideal for the accelerated decontamination of residual water following industrial procedures involving organic matter. For hot water and flotation this dramatically improves recycling times and would reduce the overall water burden for the process. Moreover, a chemical rather than physical process will be many times more efficient at removing organic compounds from the water. Better and quicker separations will also reduce opportunities for contaminated water escape thereby protecting the local environment.

For oil sands settling pools, the present invention can be implemented using only water pipes to introduce the surfactant, sluices and heating equipment - items which are already ubiquitous for existing procedures.

The surfactant can also be used to reduce the level of hydrophobic contaminants in soil by rinsing the soil with an aqueous solution of the surfactant or by applying the surfactant to the soil and washing the resulting soil with water, e.g. exposing it to natural water (for example rain or streams) or by rinsing the soil with water.

Another application of the present invention is in the treating of samples, e.g. rock samples, to extract both polar and non-polar material.

For extracting material from rocks, the surfactant solution presents polar environments external to the micelles to facilitate extraction of polar molecules and nonpolar environments inside the micelles to collect non-polar molecules.

The types of hydrocarbon and hydrocarbon-related compounds that can be extracted using the surfactant solutions include alkanes, alkenes, fatty acids, aromatic hydrocarbons, polycyclic aromatic hydrocarbons, steroids and hopanoids.

A low cmc is favoured by increasing the molecular mass of the hydrophobic alkyl chain part of the molecule. Polysorbate 80 has an extremely low cmc (13 mg L⁻¹), 20% of that of the shorter alkyl-chain-containing Polysorbate 20. Just above the cmc, surfactants associate into spherical micelles comprising around 50-100 monomers, with a radius similar to that of the length of the alkyl chain.

The amount of surfactant in the aqueous solvent must be above its cmc and may be 1 to 500 times the cmc, but optimum concentrations are around 100 times the cmc.

Organic solvents commonly cost £10-£15 per litre. Polysorbate 80 solutions at 1.5 g L⁻¹ (approximately 100 times its cmc), if made up using laboratory purification unit water, costs as little as £0.25 per litre. Polysorbate 80 forms micelles and begins the extraction process at much lower concentrations (the cmc) at a cost of 0.02 pence per litre.

Polysorbate 80 solutions and solutions of other surfactants in accordance with the present invention are environmentally benign and non-toxic. In fact Polysorbate 80 is an emulsifying agent often used in ice cream to maintain texture and shape. Water is also a generally non-hazardous material. If required Polysorbate and water can be separated by heating to the cloud point thereby producing an aqueous fraction (which is cheap to dispose of) and a fraction containing the hydrocarbon, whose volume is only slightly greater than that of the original hydrocarbon, thereby minimising the costs of disposal (or recycling). Thus the cost of disposal of the solvent is relatively small.

Adoption of surfactant technology carries little risk for industry. The surfactants are non-hazardous in nature and highly efficient.

Since the hydrophobic element of polysorbates (and their non-alkoxylated equivalents, which are known as "spans") are derived from natural, vegetable sources, there is a sustainable supply of them and they are also biodegradable and therefore have a substantially reduced impact on the environment.

Apart from the surfactant, the solvent solution may include other materials, for example other surfactants and water miscible solvents, such as methanol. In order to minimise the impact on the environment, it is preferable to use a simple water solution with a minimum amount of other surfactants and a minimum amount of other solvents.

A solution may include a mixture of surfactants in accordance with the present invention.

There will now be described, by way of example only, with reference to the following drawing and table:

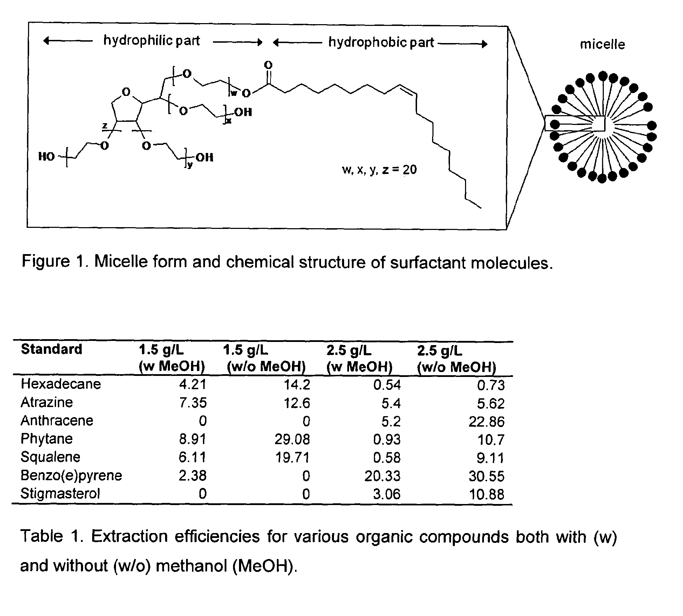

Figure 1 shows the chemical structure of polysorbate 80 and a schematic picture of a micelle formed from a hydrocarbon core that is solublised using polysorbate 80; and

Table 1 contains data showing the extraction efficiencies from rock using surfactant solutions according to the present invention.

### Detailed description of the Invention

Figure 1 shows the structure of a micelle including polysorbate 80; the core is composed of a hydrocarbon and the polysorbate 80 molecules are radially ranged round the core, as shown schematically. Figure 1 also shows the chemical structure of polysorbate 80.

### Example

JSC-1, a Martian and lunar analogue (McKay et al. (1993) JSC-1: A new lunar regolith simulant. Lunar and Planetary Institute Conference Abstracts), was spiked with various hydrocarbon compound classes (Table 1). All are known to be soluble in organic solvents, and are considered mostly insoluble in water with the exception of atrazine. 1 ml of a mixture of 10.0 ng ml⁻¹ hydrocarbon standards were spiked on to 1 g of rock, the concentrations of each nonaromatic standard amounted to 10.0 ng g⁻¹ rock (10 ppb). Terphenyl (an aromatic compound) was used as a second quantitation standard, added just before analysis in order to establish extraction efficiencies for the JSC-1 rock.

1 g samples of spiked JSC-1 rock were placed in test tubes, with 3 ml solvent and the mixture subjected to ultrasonication (20 minutes). The solvent was an aqueous surfactant solution containing polysorbate 80 in various amounts (either 1.5g/L or 2.5 g/L), as set out in Table 1. The surfactant was dissolved either in water that contains 20% methanol (referred to in Table 1 as "w MeOH") or pure water ("w/o MeOH"). After sonication the mixture was centrifuged (2500 rpm x 10 min) and the supernatant pipetted into a test tube. A liquid/liquid extraction was then performed with dichloromethane, the dichloromethane was then blown down via nitrogen to 1 ml ready for further analysis by gas chromatography-mass spectrometry.

The organic constituents of extracts were separated on an Agilent technologies 6890N gas chromatograph. Extracts were dissolved in 1 ml dichloromethane and 1µl was introduced via splitless injection into a HP-5 (0.25 mm x 30 m x 0.25 mm) capillary column in a helium carrier gas. The column oven was operated with a temperature programme starting at 50 °C for 1 min followed by a ramp of 5 °C min-1 until 310 °C where the temperature was held for 20 min. Individual compounds were identified by introducing the column effluent into an Agilent technologies 5973 inert mass selective detector operated with a 12 min solvent delay and a scan range of m/z 50 - 550.

Table 1 shows the recovery of various organic compounds mixed with rock using the above described aqueous surfactant solutions containing polysorbate 80 . The extraction efficiency is measured as the percentage of the organic compounds that are extracted as compared to the amount originally present in the rock. As can be seen from Table 1, both non-polar (e.g. hexane) and polar (stimasterol) compounds are recovered simultaneously. The compound recovery is dependent on the concentration of the surfactant in the solvent solution, although surprisingly higher polysorbate 80 concentrations lead to lower extraction efficiencies for some compounds. Other variables include temperature and pressure. As can also be seen from Table 1, the optimum recovery appears to take place between about 0.5 an 3 grams per litre of polysorbate 80, which corresponds to 40 to 230 times the cmc of polysorbate 80. The results in Table 1 show, surprisingly, that the solution of the surfactant in water only is generally a more effective solvent than the solution in water + 20% MeOH.

The present invention provides a solvent that can unexpectedly extract a wide range of organic molecules, including some strongly hydrophobic molecules, into an aqueous environment; such organic molecules are customarily dissolved using organic solvents. Accordingly the present invention can avoid the use of expensive and environmentally hazardous organic solvents. Moreover, environmentally benign surfactants within the present invention, such as sorbates and other sufactants that include alkoxylated polyol hydrophilic parts, opens up several avenues of use as discussed above and especially the possibility of treating waste waters contaminated with hydrophobic materials to accelerate the removal of such contaminants.

## Claims

1. A method of solubilising in an aqueous medium a hydrocarbon or a hydrophobic compound having a hydrocarbon skeleton that carries one or more heteroatom-containing functional groups, e.g. hydroxyl, carboxylic acid or aldehyde (CHO) groups, which method comprises contacting the hydrocarbon or the hydrophobic compound with the aqueous medium that includes at least one non-ionic surfactant containing a hydrophilic part and a hydrophobic part, the hydrophilic part comprising a polyhydroxylated moiety and the hydrophobic part comprising a hydrocarbon chain containing at least 12 carbon atoms, the amount of surfactant being sufficient to form micelles including a core formed of the hydrocarbon or the hydrophobic compound.

2. A method as claimed in claim 1, wherein the polyhydroxylated moiety comprises a polyol that has optionally been alkoxylated, e.g. methoxylated, ethoxylated or propoxylated.

3. A method as claimed in claim 2, wherein the polyhydroxylated moiety comprises a sugar that has optionally been alkoxylated.

4. A method as claimed in claim 3, wherein the polyhydroxylated moiety comprises alkoxylated sorbitol, e.g. ethoxylated sorbitol.

5. A method as claimed in any preceding claim wherein the hydrocarbon chain contains 12 to 24 carbon atoms, e.g. 14 to 20 carbon atoms, such as 18 carbon atoms.

6. A method as claimed in any preceding claim, wherein the hydrocarbon chain is linked to the polyhydroxylated moiety by an ester linkage.

7. A method as claimed in any preceding claim, wherein the hydrocarbon chain is derived from a fatty acid, e.g. lauric acid, palmitic acid, stearic acid or oleic acid.

8. A method as claimed in any preceding claim, wherein only a single hydrocarbon chain is bonded to the polyhydroxylated moiety.

9. A method as claimed in any preceding claim, wherein the hydrocarbon or the hydrophobic compound to be solubilised is suspended in water, for example in a settling tank or in a natural river or lake, e.g. water contaminated in connection with the recovery or storage of hydrocarbons.

10. A method as claimed in any of claims 1 to 8, wherein the hydrocarbon or the hydrophobic compound is a deposit on or in a solid material, e.g. on a machine or machine part or in contaminated soil, and the method comprises removing all or part of the deposit with the aqueous solution, optionally in a two-part process of applying the surfactant and solubilising the hydrocarbon or the hydrophobic compound with water.

11. A method as claimed in any of claims 1 to 8, wherein the hydrocarbon hydrocarbon or the hydrophobic compound is present in a sample, e.g. a geological sample, and the method comprises extracting the hydrocarbon from the sample using the aqueous medium that includes the at least one surfactant and optionally submitting the extracted sample to physical or chemical analysis.

12. A method as claimed in any preceding claim, which includes isolating the micelles, e.g. by heat, to form a water immiscible fraction and an aqueous fraction and the process further includes separating the water immiscible fraction from the aqueous fraction.

13. A method as claimed in any preceding claim, wherein the concentration of the said surfactant is 1 to 500 times the cmc of the surfactant(s), e.g. 30 to 300 times, such as 50 to 150 times.

14. A method as claimed in any preceding claim, wherein the hydrophobic compound having a hydrocarbon skeleton is an alkane, alkene, fatty acid, aromatic hydrocarbon, polycyclic aromatic hydrocarbon, steroid or a hopanoid.

15. A method of removing organic materials dissolved or suspended in an aqueous medium, which method comprises dissolving in the aqueous medium at least one non-ionic surfactant containing a hydrophilic part and a hydrophobic part, the hydrophilic part comprising a polyhydroxylated moiety and the hydrophobic part comprising a hydrocarbon chain containing at least 12 carbon atoms, the amount of surfactant added to the aqueous medium being sufficient to form micelles including a core formed from the organic material, the process further comprising, isolating the micelles, e.g. by application of heat to above the cloud point of the micelles, to form an organic fraction and an aqueous fraction and separating the two fractions.
